# EUROPÄISCHE PATENTSCHRIFT

(11) **EP 0 743 139 B1**
(45) Veröffentlichungstag und Bekanntmachung des Hinweises auf die Patenterteilung: **16.02.2000**
(21) Anmeldenummer: 96107595.9
(22) Anmeldetag: 13.05.1996
(51) Int. Cl.: B23Q 37/00, B23Q 1/00

(54) **Bearbeitungszentrum mit einer Spindeleinheit zur Aufnahme von Bearbeitungswerkzeugen und Bearbeitungsaggregaten für Holz- und Kunststoff-Werkstoffe**
Machining centre with a spindle unit carrying tools and groups of tools for the working of wood and plastic workpieces
Centre d'usinage avec une broche pour porter des outils et des groupes d'outils pour l'usinage de pièces en bois ou matière plastique

(30) Priorität: 15.05.1995 DE 19517808
(43) Veröffentlichungstag der Anmeldung: 20.11.1996
(73) Patentinhaber: HOMAG MASCHINENBAU AG, D-72296 Schopfloch (DE)
(72) Erfinder: Frey, Karl, 72296 Schopfloch (DE); Gauss, Achim, 75323 Bad Wildbad (DE); Kalmbach, Kurt, 72293 Glatten (DE)
(74) Vertreter: Kohlmann, Karl Friedrich, Dipl.-Ing.

(56) Entgegenhaltungen:
- EP-A- 0 092 534
- EP-A- 0 285 557
- EP-A- 0 314 824
- GB-A- 1 605 143

## Beschreibung

Die Erfindung betrifft ein Bearbeitungszentrum mit einer Spindeleinheit zur Aufnahme von Bearbeitungswerkzeugen und Bearbeitungsaggregaten für Holz-, Kunststoff-Werkstoffe oder dergleichen, nach dem Oberbegriff des Patentanspruches 1.

Mit derartigen Bearbeitungszentren werden eine Vielzahl aufeinanderfolgender Bearbeitungsschritte, beispielsweise Bohr-, Fräs-, Meßvorgänge und dergleichen, an Werkstücken aus Holz-, Kunststoff-, Schicht- oder Verbundwerkstoffen durchgeführt. Bestimmte Bearbeitungswerkzeuge benötigen für die Bearbeitung nur das Drehmoment und die Drehzahl der Bearbeitungsspindel und können z.B. durch eine automatische Werkzeugwechseleinrichtung in die Spindeleinheit eingewechselt werden. Dagegen erfordern komplexere Bearbeitungsaggregate je nach ihrer Ausgestaltung zusätzliche Antriebe und/oder eine zusätzliche Versorgung mit Druckluft, Hilfsenergie und dergleichen, beispielsweise für separat angetriebene und gesteuerte Komponenten des Bearbeitungsaggregates.

Bisher werden für die Verwendung solcher komplexer Bearbeitungsaggregate Insellösungen geschaffen, d.h. ein bestimmtes Bearbeitungszentrum wird speziell für bestimmte Bearbeitungswerkzeuge und Bearbeitungsaggregate eingerichtet, wobei die erforderlichen zusätzlichen Antriebe, Steuerleitungen, Pneumatikaggregate, Meßleitungen und dergleichen meist seitlich fest angebaut werden (vgl. beispielsweise EP-A-03 14 824). Es besteht also bisher keine schnelle und einfache Möglichkeit zur Anpassung an veränderte betriebliche Erfordernisse.

Zudem ist bei den bisherigen Bearbeitungszentren, die mit meist starr und seitlich angebauten Antrieben, Aggregaten und Versorgungsleitungen versehen sind, der Verfahrbereich der Spindeleinheit stark eingeschränkt. Durch die seitlich angebauten Antriebe und Versorgungseinrichtungen ist es beispielsweise meist nicht möglich, das Bearbeitungsaggregat unendlich um 360° zu drehen. Dies führt zu umständlichen Anfahrroutinen und einer schwierigen Programmierung des Bearbeitungszentrums. Weiterhin kann durch die außen angesetzten zusätzlichen Antriebe und Versorgungseinrichtungen, die teilweise stark seitlich auskragen, auch die einwandfreie Späneentsorgung während des Bearbeitungsvorganges beeinträchtigt werden.

Der Erfindung liegt daher das technische Problem zugrunde, ein gattungsgemäßes Bearbeitungszentrum derart auszubilden, daß die Spindeleinheit sowie dem Bearbeitungswerkzeug bwz. Bearbeitungsaggregat zugeordnete Dreh- und Versorgungseinrichtungen baulich kompakt gestaltet sind und die antriebs- und Versorgungsfunktionen systematisiert bereitgestellt werden.

Dieses technische Problem wird erfindungsgemäß von einem Bearbeitungszentrum mit den Merkmalen des Patentanspruches 1 gelöst.

Beim erfindungsgemäßen Bearbeitungszentrum sind die Dreheinrichtung und die Versorgungseinrichtungen jeweils modular aufgebaut. Dadurch ergibt sich ein Baukastensystem für die Dreh- und Versorgungseinrichtungen, die jeweils für ein bestimmtes Bearbeitungswerkzeug bzw. Bearbeitungsaggregat benötigt werden. Dabei sind die Dreheinrichtung und die Versorgungseinrichtungen jeweils konzentrisch um die Bearbeitungsspindel angeordnet. Durch diese konzentrische Anordnung der Dreh- und Versorgungseinrichtungen wird eine sehr kompakte und systematische Bauweise realisiert. Durch ihren modularen Aufbau können jeweils diejenigen Dreh- und Versorgungseinrichtungen um die Bearbeitungsspindel gruppiert werden, die für ein bestimmtes Bearbeitungsaggregat oder für eine bestimmte Bearbeitungsabfolge benötigt werden. Ferner können durch dieses Baukastensystem Bearbeitungszentren durch Anbau eines oder mehrerer Module für die Drehrichtung und/oder die Versorgungseinrichtungen auf einfache Weise an veränderte betriebliche Erfordernisse angepaßt und für komplexere Bearbeitungswerkzeuge bzw. Bearbeitungsaggregate nachgerüstet werden.

Zwar ist es bei Revolverköpfen für Bearbeitungsmaschinen bereits bekannt, den zentralen, über ein Schrittschaltwerk drehbaren Ständerschaft konzentrisch mit Schleifringanordnungen zu umgeben, um über diese die am Schaft seitlich angeordneten Köpfe für die Bearbeitungswerkzeuge mit einem Fluid und/oder elektrischer Antriebs- bzw. Steuerenergie zu versorgen (vgl. beispielsweise GB-A-16 05 143). Bei diesen Konstruktionen fehlt es jedoch ebenfalls an einem Ansatz für einen modularen Aufbau nach Art eines Baukastenssystemes und damit an einer einfachen Möglichkeit einer Anpassung an veränderte betriebliche Erfordernisse. Auch Umgeben die Schleifringanordungen bei dieser bekannten Konstruktion nicht die Bearbeitungsspindel, sondern den Ständerschaft.

In einer zweckmäßigen Ausgestaltung der Erfindung sind die Dreheinrichtung und die Versorgungseinrichtungen der Spindeljeweils als in sich geschlossene, aufeinander abgestimmte Baugruppen ausgebildet. Die abgeschlossenen Baugruppen sind somit leicht an- und abbaubar, um ein Bearbeitungszentrum entsprechend nachzurüsten, und die Baugruppen lassen sich schnell und servicefreundlich austauschen. Dadurch, daß die einzelnen Baugruppen baulich aufeinander abgestimmt sind, lassen sie sich auf sehr platzsparende Weise konzentrisch um die Bearbeitungsspindel anordnen.

Erfindungsgemäß ist es vorteilhaft, die Dreheinrichtung und die Versorgungseinrichtungen der Spindeleinheit im wesentlichen hülsen- bzw. ringförmig auszubilden. So lassen sich die Dreh- und Versorgungseinrichtungen nach Art einer Zwiebelschale konzentrisch um die Bearbeitungsspindel gruppieren, wobei gegebenenfalls aber auch zwei hülsen- bzw. ringförmige Module bzw. Teilmodule in Richtung der Spindelachse gesehen hintereinander plaziert werden können. Durch diese geometrische Ausgestaltung der modularen Baugruppen ist eine funktionelle, kompakte und leicht in ihren einzelnen Baugruppen montierbare Anordnung gewährleistet. Ferner bleibt durch die im wesentlichen hülsen- bzw. ringförmige Geometrie der Spindelhals selbst bei Einsatz mehrerer Dreh- und Versorgungseinrichtungen insgesamt schlank, so daß Späne, die beispielsweise beim Fräsen oder Bohren anfallen, gut entsorgt werden können.

Nach einer zweckmäßigen Ausführung der Erfindung wird die Bearbeitungsspindel unmittelbar von der Dreheinrichtung zum Schwenken des Bearbeitungswerkzeuges bzw. Bearbeitungsaggregates um die C-Achse umgeben. Vorzugsweise besteht die Dreheinrichtung der Spindeleinheit aus einem Sockelteil, der am Spindelgehäuse befestigt ist, und aus einer Drehhülse, die fliegend an diesem Sockelteil gelagert ist. Insbesondere im Bereich der fliegend gelagerten Drehhülse läßt sich so eine schlanke und kompakte Bauweise der Dreheinrichtung realisieren. Es ist vorteilhaft, wenn das Antriebsmoment für die Drehhülse im Bereich des Sockelteiles, beispielsweise mittels einer Zahnradanordnung, auf die Drehhülse übertragen wird.

In einer bevorzugten Ausgestaltung ist die Drehhülse der Dreheinrichtung endlos um 360° drehbar, so daß keine Endbegrenzung für die Drehbewegung erforderlich ist. Gegenüber Konstruktionen mit einem eingeschränkten Schwenkwinkel spart man sich unnötige zusätzliche Anfahrroutinen, und die Anfahr- und Endpunkte können willkürlich und zeitoptimal gewählt werden. Somit wird auch die Programmierung des Bearbeitungszentrums vereinfacht und die Fehlerquote minimiert.

Eine zweckmäßige Ausgestaltung der Erfindung besteht darin, die Drehhülse der Dreheinrichtung mit Durchgangsleitungen für Druckluft und/oder ein Fluid sowie mit Druckluft- bzw. Fluidanschlüssen im Bereich ihrer dem Bearbeitungswerkzeug bzw. Bearbeitungsaggregat zugewandten Stirnseite zu versehen. Die Durchgangsleitungen für Druckluft, Hydraulikflüssigkeit, Kühlflüssigkeit oder andere Flüssigkeiten und Gase können beispielsweise in Form von Kanälen ausgebildet sein, die sich durch das Innere des Mantels der Drehhülse hindurcherstrecken. Zweckmäßigerweise ist dann die Einrichtung zur Versorgung mit Druckluft und/oder einem Fluid, d.h. ein verbleibendes Teilmodul, das z.B. Druckluftzuführungen beinhaltet, auf der Außenseite der Dreheinrichtung angeordnet und weist Übertragungsöffnungen zu den Durchgangsleitungen der Dreheinrichtung auf. So kann die Versorgungseinrichtung für Druckluft und/oder ein Fluid, d.h. das verbleibende Teilmodul, in Richtung der Spindelachse kürzer und damit platzsparender ausgebildet sein als die Drehhülse, und trotzdem kann Druckluft und/oder Fluid über die Durchgangsleitungen der Drehhülse in den Bereich der dem Bearbeitungsaggregat zugewandten Stirnfläche der Dreheinrichtung zugeführt werden.

Als Weiterbildung der vorangehend beschriebenen Ausführungsform wird die Einrichtung zur Versorgung mit elektrischer Antriebs- und/oder Steuerenergie auf der Außenseite der Dreheinrichtung, und zwar in Richtung der Spindelachse benachbart zum Teilmodul der Druckluft-/Fluid-Versorungseinrichtung angeordnet. Durch dieses Hintereinanderanordnen des Druckluft/Fluid-Teilmoduls und des Moduls zur Versorgung mit elektrischer Antriebs- und/oder Steuerenergie bleibt der Spindelhals schmal und baulich kompakt. Zum einen werden so seitlich auskragende Teile vermieden, die beim Bearbeitungsvorgang hinderlich sein könnten, und zum anderen wird so eine unproblematische Späneabfuhr begünstigt.

Eine weitere bevorzugte Ausgestaltung der Erfindung besteht darin, die Einrichtung zur Versorgung mit Druckluft und/oder einem Fluid, zweckmäßigerweise in Form eines im wesentlichen hülsenförmigen Moduls, auf der Außenseite der Dreheinrichtung anzuordnen und im Bereich der dem Bearbeitungswerkzeug bzw. Bearbeitungsaggregat zugewandten Stirnseite der Druckluft/Fluid-Versorgungseinrichtung Druckluftanschlüsse bzw. Anschlüsse für das Fluid vorzusehen. Vorzugsweise wird dann als Weiterbildung die Einrichtung zur Versorgung mit elektrischer Antriebs- und/oder Steuerenergie auf der Außenseite der Einrichtung zur Versorgung mit Druckluft und/oder einem Fluid angeordnet.

Bei dieser Ausführung werden also die Dreheinrichtung, die Einrichtung zur Versorgung mit Druckluft und/oder einem Fluid und die Einrichtung zur Versorgung mit elektrischer Antriebs- und/oder Steuerenergie nach Art einer Zwiebelschale bezüglich der Spindelachse von innen nach außen um die Bearbeitungsspindel gruppiert.

In einer bevorzugten Ausführungsform weist die Einrichtung zur Versorgung mit elektrischer Antriebs- und/oder Steuerenergie im Bereich ihrer dem Bearbeitungswerkzeug bzw. Bearbeitungsaggregat zugewandten Stirnseite Kontaktanordnungen auf. Mittels dieser Kontaktanordnungen können je nach Bedarf elektrische Antriebsenergie, Steuerenergie sowie Meß- und andere Dateninformationen an ein Bearbeitungswerkzeug bzw. Bearbeitungsaggregat übertragen oder, z.B. im Falle von Meßdaten, von diesem empfangen werden.

Es ist erfindungsgemäß günstig, die Einrichtung zur Versorgung mit elektrischer Antriebs- und/oder Steuerenergie wiederum in sich modular auszubilden, so daß über einzelnde Teilmodule dieser Versorgungseinrichtung beispielsweise elektrische Antriebsenergie oder Hilfsenergie, etwa für Steuerleitungen, bereitgestellt werden kann. Ferner können bei einem modularen Aufbau dieser Versorgungseinrichtung Teilmodule zur Feldbustechnik, Echtzeittechnik und dergleichen implementiert werden.

In einer günstigen Ausgestaltung der Erfindung weist die Dreheinrichtung der Spindeleinheit im Bereich ihrer dem Bearbeitungswerkzeug bzw. Bearbeitungsaggregat zugewandten Stirnseite Verriegelungselemente zur Übertragung eines Drehmomentes für eine Drehung um die C-Achse auf.

Eine bevorzugte Ausführung der Erfindung besteht darin, die Stirnseiten der Dreheinrichtung und der Versorgungseinrichtungen als konzentrisch zueinander angeordnete Ringflächen auszubilden, die im wesentlichen in einer gemeinsamen Ebene liegen. Im Falle der vorangehend beschriebenen Ausgestaltungen, bei denen die Dreheinrichtung, die Einrichtung zur Versorgung mit Druckluft- und/oder einem Fluid und die Einrichtung zur Versorgung mit elektrischer Antriebs-und/oder Steuerenergie von innen nach außen um die Spindelachse gruppiert sind, liegen dann sämtliche Stirnflächen der Dreh- und Versorgungseinrichtungen mit den daran angeordneten Verriegelungselementen, Druckluft- bzw. Fluidanschlüssen und Kontaktanordnungen im wesentlichen in einer gemeinsamen Ebene. Zusammen mit der Stirnfläche der Bearbeitungsspindel, die vorzugsweise ebenfalls im wesentlichen in dieser gemeinsamen Ebene liegt, ergibt sich dann eine universelle Schnittstelle, an der je nach Ausbaustufe der Dreheinrichtungs- und Versorgungseinrichtungsmodule das Antriebsmoment und die Drehzahl der Bearbeitungsspindel, eine Pneumatik- und/oder Fluidversorgung, elektrische Antriebs- und/oder Steuerenergie oder andere Versorgungsfunktionen zur Verfügung stehen. Sämtliche Versorgungsfunktionen stehen so in vorteilhafter Weise in einer klar definierten gemeinsamen Schnittstellenebene zur Verfügung. Somit ergibt sich eine äußerst kompakte und übersichtliche Spindeleinheit, an der sowohl vergleichsweise einfache Bearbeitungswerkzeuge als auch sehr komplexe Bearbeitungsaggregate schnell und problemlos eingewechselt werden können.

Im Falle der vorangehend beschriebenen Ausführungsform, bei der die Versorgungseinrichtung für Druckluft und/oder ein Fluid und die Versorgungseinrichtung für elektrische Antriebs- und/oder Steuerenergie in Richtung der Spindelachse gesehen hintereinander angeordnet sind, wobei die Druckluft und/oder das Fluid über die Drehhülse der Dreheinrichtung der Stirnfläche der Dreheinrichtung zugeführt werden, besteht eine bevorzugte Ausführung der Erfindung darin, daß die freien, dem Bearbeitungswerkzeug bzw. Bearbeitungsaggregat zugewandten Stirnseiten der Dreh- und Versorgungseinrichtung als konzentrisch zueinander angeordnete Ringflächen ausgebildet sind, die im wesentlichen in einer gemeinsamen Ebene liegen. Mit anderen Worten liegen die dem Bearbeitungswerkzeug bzw. Bearbeitungsaggregat zugewandten stirnseitigen Ringflächen der Dreheinrichtung und der Versorgungseinrichtung für elektrische Antriebs- und/oder Steuerenergie im wesentlichen in einer gemeinsamen Ebene. Weiterhin sind Druckluft und/oder Fluidanschlüsse an der Stirnseite der Drehhülse der Dreheinrichtung ebenfalls im wesentlichen in dieser gemeinsamen Ebene ausgebildet, und vorzugsweise liegt auch die Stirnseite der Bearbeitungsspindel im wesentlichen in dieser gemeinsamen Ebene. Auch bei dieser erfindungsgemäßen Ausgestaltung ergibt sich also eine universelle Schnittstelle in einer gemeinsamen Ebene, an der je nach Bedarf sämtliche Versorgungsfunktionen für das Bearbeitungswerkzeug bzw. Bearbeitungsaggregat zur Verfügung stehen.

Die aus dem erfindungsgemäßen Aufbau resultierende universelle, in einer gemeinsamen Ebene gelegene Schnittstelle entwickelt das Bearbeitungszentrum zu einem offenen System weiter, das für Bearbeitungswerkzeuge, Bearbeitungsaggregate, Handling- und Transport-Aggregate, Meßsysteme, Auftragsgeräte, beispielsweise für Lack, Primer etc., Positionierungs- und Entsorgungsaggregate verwendbar ist. Das Bearbeitungszentrum ist durch die modular nachrüstbaren zusätzlichen Dreh- und Versorgungseinrichtungen jederzeit für komplexere Bearbeitungsaufgaben ausbaufähig und kann durch Austausch der modularen Einrichtungen der technischen Weiterentwicklung angepaßt werden. Ferner lassen sich durch den konzentrischen modularen Aufbau beispielsweise zwei unabhängige Systeme an die Spindeleinheit einwechseln, wobei der Wechselvorgang für beide Systeme, z.B. ein Bearbeitungsaggregat und einen Meßtaster, automatisch mittels einer Wechseleinrichtung erfolgen kann. Es besteht aber auch die Möglichkeit, ein System automatisch und ein anderes System manuell einzuwechseln. Das erfindungsgemäße Bearbeitungszentrum ermöglicht also durch den modularen Aufbau der Dreheinrichtung und der Versorgungseinrichtungen und deren konzentrische Anordnung um die Bearbeitungsspindel insbesondere eine stufenweise Nachrüstbarkeit, einen leichten An- und Abbau und einen schnellen, servicefreundlichen Austausch dieser Einrichtungen.

Nachfolgend wird ein Ausführungsbeispiel des erfindungsgemäßen Bearbeitungszentrums mit Bezug auf die beigefügten Zeichnungen näher erläutert.

Es zeigen:
- Fig. 1: ein teilweise im Längsschnitt dargestelltes Ausführungsbeispiel der Spindeleinheit des erfindungsgemäßen Bearbeitungszentrums mit einem an die Spindeleinheit montierten Bearbeitungsaggregat;
- Fig. 2: eine Seitenansicht der Spindeleinheit mit Hochfrequenzspindel des Ausführungsbeispieles gemäß Fig. 1;
- Fig. 3: eine Seitenansicht des C-Achse-Drehmoduls des Ausführungsbeispieles gemäß Fig. 1;
- Fig. 4: eine Seitenansicht des Pneumatik-Moduls des Ausführungsbeispieles gemäß Fig. 1;
- Fig. 5: eine Seitenansicht des Elektrik-/Elektronik-Moduls des Ausführungsbeispieles gemäß Fig. 1;
- Fig. 6: eine Seitenansicht der Spindeleinheit mit Hochfrequenzspindel gemäß Fig. 2 mit dem darauf montierten C-Achse-Drehmodul gemäß Fig. 3;
- Fig. 7: eine Seitenansicht der Spindeleinheit gemäß Fig. 6 mit zusätzlich montiertem Pneumatik-Modul gemäß Fig. 4;
- Fig. 8: eine Seitenansicht der Spindeleinheit gemäß Fig. 7 mit zusätzlich montiertem Elektrik-/Elektronik-Modul gemäß Fig. 5.

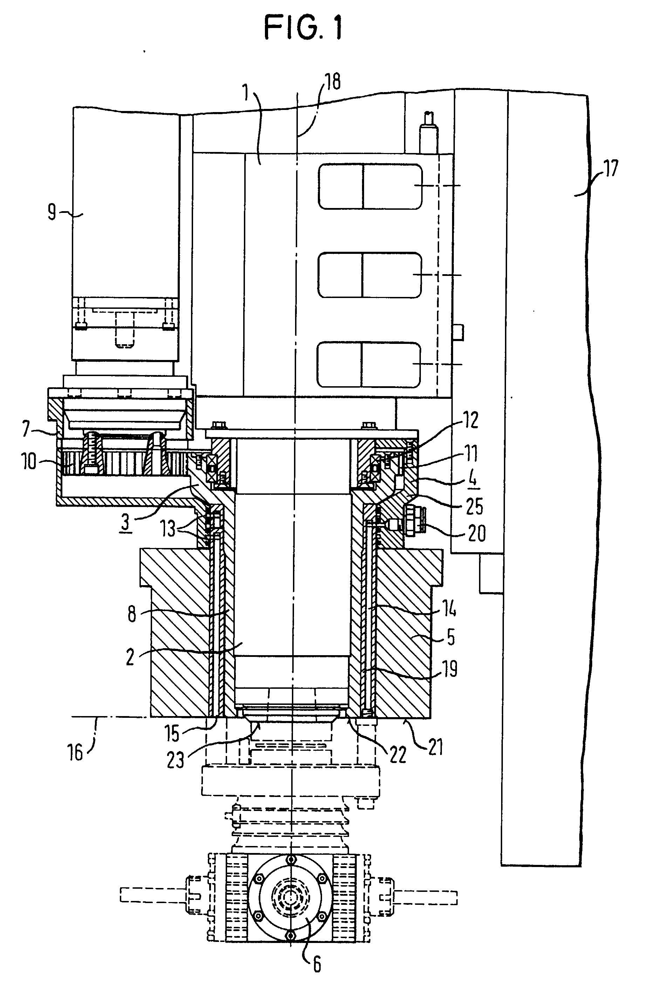

In Fig. 1 ist eine Spindeleinheit mit einem Spindelgehäuse 1 dargestellt, die mit einer Hochfrequenzspindel 2, einem C-Achse-Drehmodul 3, einem Pneumatik-Modul 4 und einem Elektrik-/Elektronik-Modul 5 ausgerüstet ist. An dieser Spindeleinheit ist ein an sich bekanntes Bearbeitungsaggregat 6 montiert, auf das im einzelnen nicht weiter eingegangen wird. Dieses beispielhaft montierte Bearbeitungsaggregat 6 benötigt neben dem Drehmoment und der Drehzahl der Hochfrequenzspindel 2 außerdem ein Drehmoment für Schwenkungen um die C-Achse sowie eine Druckluft-Versorgung. Die C-Achse fällt geometrisch mit der Spindelachse 18 zusammen. Die Spindeleinheit mitsamt den daran montierten Modulen 3, 4, 5 sowie dem Bearbeitungsaggregat 6 ist entlang einer Führungsanordnung 17 in Z-Richtung verfahrbar.

Das C-Achse-Drehmodul 3 ist als in sich geschlossene Baugruppe ausgebildet. Diese Baugruppe umfaßt einen Sockelteil 7, der einen Antriebsmotor 9 trägt, sowie eine Drehhülse 8. Der Antriebsmotor 9, der sich über den Sockelteil 7 am Spindelgehäuse 1 abstützt, treibt über ein Antriebsritzel 10 die Drehhülse 8 an, wobei das Antriebsmoment vom Antriebsritzel 10 im Bereich des Sockelteiles 7 auf einen an der Drehhülse 8 ausgebildeten Zahnkranz 11 übertragen wird. Die Drehhülse 8 umgibt die Hochfrequenzspindel 2 und sie ist an ihrem antriebsseitigen Ende mittels einer Wälzlagerung 12 fliegend gelagert. Das C-Achse-Drehmodul 3 ist an seiner Stirnfläche 22 mit (nicht dargestellten) Verriegelungselementen zur Übertragung eines Antriebsdrehmomentes versehen.

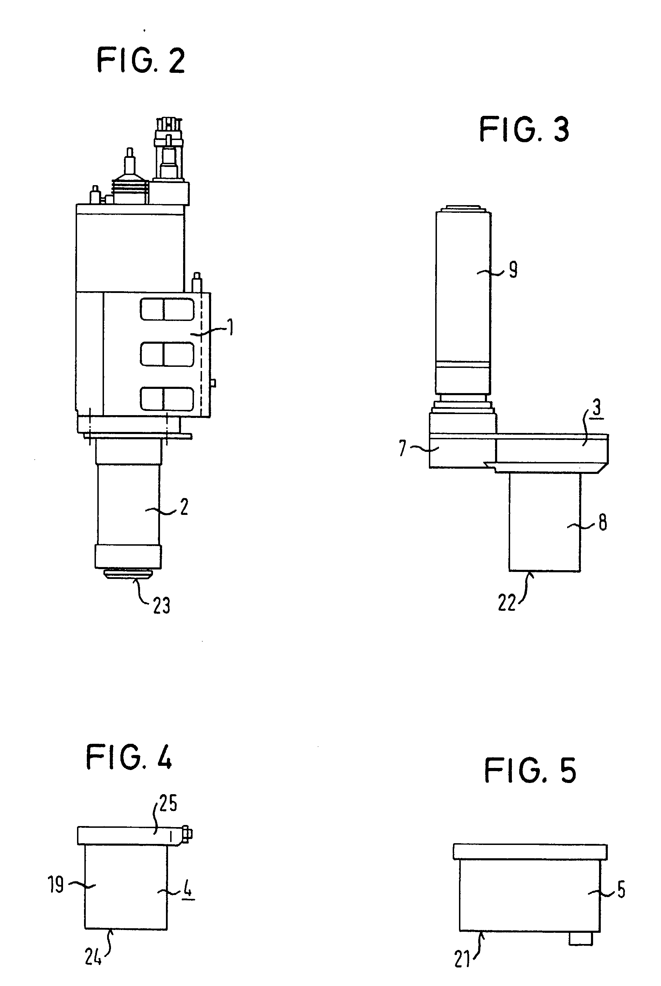

Das Pneumatik-Modul 4 ist konzentrisch um das C-Achse-Drehmodul 3 angeordnet. Es umfaßt ein Übertragungselement 25, das im wesentlichen hülsenförmig gestaltet und fest mit dem Spindelgehäuse 1 verbunden ist, sowie eine Hülse 19, die drehfest mit der Drehhülse 8 des C-Achse-Drehmoduls 3 verbunden ist. Innerhalb der Hülse 19 sind Durchgangskanäle 14 angeordnet, die an der dem Bearbeitungsaggregat 6 zugewandten Stirnseite der Hülse 19 in Form von Druckluft-Anschlüssen 15 enden. Das Übertragungselement 25 ist an seiner ringförmigen Innenfläche mit Ringnuten 13 versehen, die mit entsprechenden Anschlußöffnungen der Durchgangskanäle 14 der Hülse 19 kommunizieren. Die Ringnuten 13 stehen mit Druckluft-Anschlüssen 20 in Verbindung, die an der Außenseite des Übertragungselementes 25 angeordnet sind. Durch die Ringnuten 13 ist die Zuführung der Druckluft vom Übertragungselement 25 zur Stirnfläche 24 (siehe Fig. 4) für jede Winkelposition, die die Hülse 19 bei Drehung der Drehhülse 8 um die C-Achse einnimmt, gewährleistet.

Das im wesentlichen hülsenförmig gestaltete Elektrik-/Elektronik-Modul 5 grenzt an die dem Bearbeitungsaggregat zugewandte Stirnfläche des Übertragungselementes 25 und umschließt mit seiner Innenfläche einen Teil der Hülse 19 des Pneumatik-Moduls 4. Das Elektrik-/Elektronik-Modul 5 ist drehfest mit dem Spindelgehäuse 1 verbunden und ist in sich modular aufgebaut, um je nach Bedarf Teilmodule für elektrische Antriebsenergie, elektrische Hilfsenergie, z.B. für Steuerleitungen, für Feldbustechnik, Echtzeittechnik und dergleichen bereitzustellen. Weiterhin weist das Elektrik-/Elektronik-Modul 5 an seiner dem Bearbeitungsaggregat 6 zugewandten Stirnseite (nicht dargestellte) Kontaktanordnungen auf.

Sowohl die ringförmige Stirnfläche 21 des Elektrik-/Elektronik-Moduls 5 als auch die ringförmige Stirnfläche 24 (siehe Fig. 4) des Pneumatik-Moduls 4 sowie die ringförmige Stirnfläche 22 des C-Achse-Drehmoduls 3 liegen in einer gemeinsamen Schnittstellenebene 16. Ebenso liegt die Stirnfläche 23 der Hochfrequenzspindel 2 im wesentlichen in dieser gemeinsamen Schnittstellenebene 16. Somit liegen die Schnittstellen zur Übertragung des Drehmomentes und der Drehzahl der Hochfrequenzspindel 2 im Bereich der Stirnfläche 23, zur Übertragung des Antriebsdrehmomentes des C-Achse-Drehmoduls 3 in Form der (nicht dargestellten) Verriegelungselemente, die Schnittstelle des Pneumatik-Moduls 4 in Form der Druckluft-Anschlüsse 15 und die Schnittstelle des Elektrik-/Elektronik-Moduls 5 in Form der (nicht dargestellten) Kontaktanordnungen im wesentlichen in der gemeinsamen Schnittstellenebene 16. In dieser Schnittstellenebene 16 ist also eine universelle Schnittstelle ausgebildet, die das Bearbeitungszentrum zu einem offenen System macht, das je nach Bedarf des montierten Bearbeitungswerkzeuges, Bearbeitungsaggregates oder anderweitigen Aggregats die jeweiligen Antriebs- und Versorgungsfunktionen räumlich kompakt an einer klar definierten Stelle bereitstellt.

Die einzelnen Antriebs- und Versorgungsmodule 3, 4 und 5 lassen sich einzeln nachrüsten bzw. zu Service-Zwecken austauschen und selbst bei der in Fig. 1 gezeigten Ausbaustufe bleibt der Spindelhals nach wie vor relativ schmal, was die Späne-Entsorgung vom Bearbeitungsaggregat weg erleichtert und wesentliche Vorteile für die Programmierung des Bearbeitungsvorganges mit sich bringt, da keine seitlich auskragenden Teile der Antriebs- und Versorgungseinrichtungen bei Verfahrvorgängen der Spindeleinheit bzw. beim Bearbeitungsvorgang im Wege sind.

Das in Fig. 1 beispielhaft gezeigte Bearbeitungsaggregat 6 erhält von der Spindeleinheit im Bereich der Schnittstellenebene 16 das Drehmoment und die Drehzahl der Hochfrequenzspindel 2, das Antriebsdrehmoment der Drehhülse 8 sowie Druckluft an den Druckluft-Anschlüssen 15.

Die in den Fig. 2 bis 8 dargestellten Komponenten sind Baugruppen der Spindeleinheit gemäß Fig. 1 und entsprechend werden die gleichen Bezugzeichen verwendet. Hinsichtlich einer detaillierten Beschreibung dieser Komponenten wird auf die vorangehenden Ausführungen zur Fig. 1 verwiesen.

In Fig. 2 ist die Spindeleinheit mit dem Spindelgehäuse 1 sowie der Hochfrequenzspindel 2 abgebildet. Im Bereich der Stirnfläche 23 können je nach Bedarf verschiedenste Bearbeitungswerkzeuge oder Bearbeitungsaggregate zur Übertragung von Drehmoment und der Drehzahl an die Hochfrequenzspindel 2 angeschlossen werden. Aus Fig. 3 ist das in sich geschlossene C-Achse-Drehmodul 3 ersichtlich, bestehend aus dem Sockelteil 7, dem daran angeordneten Antriebsmotor 9 sowie der Drehhülse 8. Fig. 3 veranschaulicht, daß das C-Achse-Drehmodul 3 im Bereich der Drehhülse 8 baulich sehr schlank ausgeführt ist. Fig. 4 zeigt das in sich geschlossene Pneumatik-Modul 4, bestehend aus dem Übertragungselement 25 und der Hülse 19, während Fig. 5 das in sich geschlossene Elektrik-/Elektronik-Modul 5 veranschaulicht.

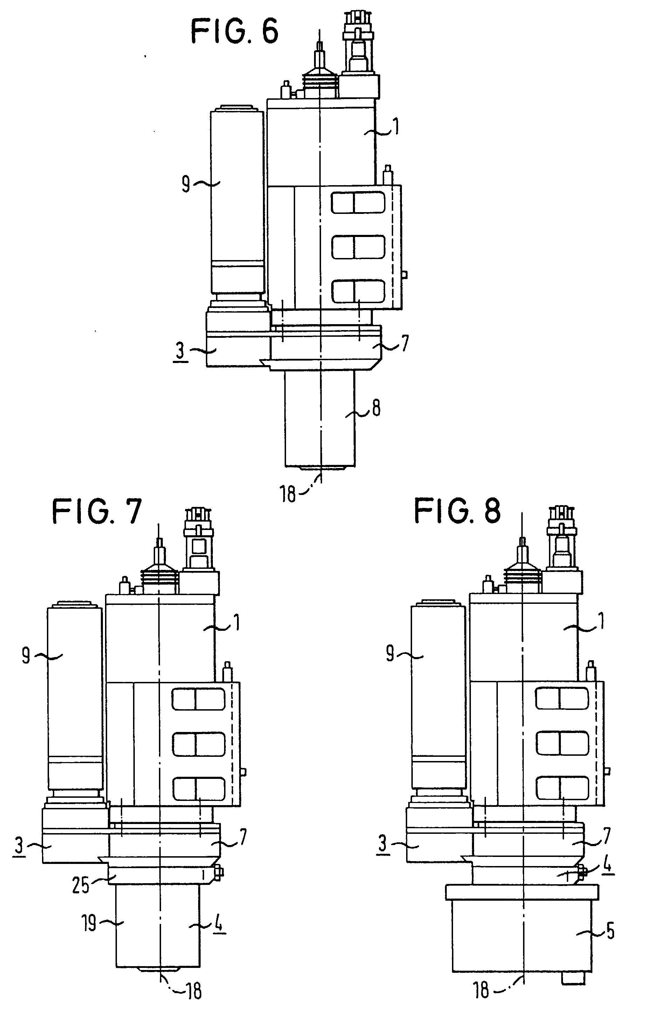

Fig. 6 illustriert die Ausbaustufe der Spindeleinheit, bei der auf die Grundkonfiguration mit der Hochfrequenzspindel das C-Achse-Drehmodul 3 aufgesetzt ist. Damit der Spindelhals durch die konzentrische Anordnung der Drehhülse 8 um die Hochfrequenzspindel schlank bleibt, ist der Antriebsmotor 9 vom Sockelteil 7 aus parallel zur Spindelachse 18 seitlich neben dem Spindelgehäuse 1 vom Bereich des Spindelhalses weggeführt.

In Fig. 7 ist bei der in Fig. 6 dargestellten Konfiguration zusätzlich das Pneumatik-Modul 4 montiert, wobei dieses Modul das C-Achse-Drehmodul 3 konzentrisch umgibt. Bei der Ausbaustufe gemäß Fig. 8 ist bei der Konfiguration von Fig. 7 zusätzlich das Elektrik-/Elektronik-Modul 5 aufgesetzt, das das Pneumatik-Modul 4 konzentrisch umgibt.

## Patentansprüche

1. Bearbeitungszentrum mit einer Spindeleinheit zur Aufnahme von Bearbeitungswerkzeugen und Bearbeitungsaggregaten für Holz- und Kunststoff-Werkstoffe oder dergleichen,
- mit einem über eine Führungsanordnung in X-, Y-, und Z-Richtung (17) bewegbaren Spindelgehäuse (1),
- einer in dem Spindelgehäuse (1) um eine C-Achse (18) drehbar gelagerten, angetriebenen Bearbeitungsspindel (2),
- einer mit dem Spindelgehäuse (1) verbundenen Dreheinrichtung (3) zum Positionieren der Bearbeitungsaggregate (6) beim Bearbeitungsvorgang um die C-Achse (18)
- sowie Einrichtungen (4, 5) zur Versorgung der Bearbeitungswerkzeuge und Bearbeitungsaggregate mit Druckluft und/oder einem Fluid, elektrischer Antriebs- und/oder Steuerenergie und dergleichen
**dadurch gekennzeichnet, daß**
die Dreheinrichtung (3) und die Versorgungseinrichtungen (4, 5) jeweils modular aufgebaut sind und die Bearbeitungsspindel (2) konzentrisch umgeben.

2. Bearbeitungszentrum nach Anspruch 1,
**dadurch gekennzeichnet, daß**
die Dreheinrichtung (3) und die Versorgungseinrichtungen (4, 5) der Spindeleinheit jeweils als in sich geschlossene, aufeinander abgestimmte Baugruppen ausgebildet sind.

3. Bearbeitungszentrum nach Anspruch 1 oder 2,
**dadurch gekennzeichnet, daß**
die Dreheinrichtung (3) und die Versorgungseinrichtungen (4, 5) der Spindeleinheit im wesentlichen hülsen- bzw. ringförmig ausgebildet sind.

4. Bearbeitungszentrum nach einem der Ansprüche 1 bis 3,
**dadurch gekennzeichnet, daß**
die Dreheinrichtung (3) die Bearbeitungsspindel (2) unmittelbar umgibt.

5. Bearbeitungszentrum nach einem der Ansprüche 1 bis 4,
**dadurch gekennzeichnet, daß**
die Dreheinrichtung (3) der Spindeleinheit aus einem am Spindelgehäuse (1) befestigten Sockelteil (7) und einer an diesem fliegend gelagerten Drehhülse (8) besteht.

6. Bearbeitungszentrum nach Anspruch 5,
**dadurch gekennzeichnet, daß**
das Antriebsmoment für die Drehhülse im Bereich des Sockelteiles (7) auf die Drehhülse (8) übertragen wird.

7. Bearbeitungszentrum nach Anspruch 5 oder 6,
**dadurch gekennzeichnet, daß**
die Drehhülse (8) der Dreheinrichtung (3) endlos um 360° drehbar ist.

8. Bearbeitungszentrum nach einem der Ansprüche 5 bis 7,
**dadurch gekennzeichnet, daß**
die Drehhülse (8) der Dreheinrichtung (3) mit Durchgangsleitungen für Druckluft und/oder ein Fluid sowie mit Druckluft- bzw. Fluidanschlüssen im Bereich ihrer dem Bearbeitungswerkzeug bzw. Bearbeitungsaggregat zugewandten Stirnseite versehen ist.

9. Bearbeitungszentrum nach Anspruch 8,
**dadurch gekennzeichnet, daß**
die Einrichtung (4) zur Versorgung mit Druckluft und/oder einem Fluid auf der Außenseite der Dreheinrichtung (3) angeordnet ist und Übertragungsöffnungen zu den Durchgangsleitungen der Dreheinrichtung (3) aufweist.

10. Bearbeitungszentrum nach Anspruch 9,
**dadurch gekennzeichnet, daß**
die Einrichtung (5) zur Versorgung mit elektrischer Antriebs- und/oder Steuerenergie auf der Außenseite der Dreheinrichtung (3), in Richtung der Spindelachse benachbart zur Versorgungseinrichtung (4) für Druckluft und/oder ein Fluid angeordnet ist.

11. Bearbeitungszentrum nach einem der Ansprüche 1 bis 7,
**dadurch gekennzeichnet, daß**
die Einrichtung (4) zur Versorgung mit Druckluft und/oder einem Fluid auf der Außenseite der Dreheinrichtung (3) angeordnet ist und im Bereich ihrer dem Bearbeitungswerkzeug bzw. Bearbeitungsaggregat zugewandten Stirnseite (24) Druckluftanschlüsse (15) bzw. Anschlüsse für das Fluid aufweist.

12. Bearbeitungszentrum nach Anspruch 11,
**dadurch gekennzeichnet, daß**
die Einrichtung (5) zur Versorgung mit elektrischer Antriebs- und/oder Steuerenergie auf der Außenseite der Einrichtung (4) zur Versorgung mit Druckluft und/oder einem Fluid angeordnet ist.

13. Bearbeitungszentrum nach einem der Ansprüche 1 bis 12,
**dadurch gekennzeichnet, daß**
die Einrichtung (5) zur Versorgung der Bearbeitungswerkzeuge und Bearbeitungsaggregate mit elektrischer Antriebs- und/oder Steuerenergie im Bereich ihrer dem Bearbeitungswerkzeug bzw. Bearbeitungsaggregat zugewandten Stirnseite (21) Kontaktanordnungen aufweist.

14. Bearbeitungszentrum nach einem der Ansprüche 1 bis 13,
**dadurch gekennzeichnet, daß**
die Einrichtung (5) zur Versorgung mit elektrischer Antriebs- und/oder Steuerenergie in sich modular aufgebaut ist.

15. Bearbeitungszentrum nach einem der Ansprüche 1 bis 14,
**dadurch gekennzeichnet, daß**
die Dreheinrichtung (3) der Spindeleinheit im Bereich ihrer dem Bearbeitungswerkzeug bzw. Bearbeitungsaggregat zugewandten Stirnseite (22) Verriegelungselemente zur Übertragung eines Drehmomentes für eine Drehung um die C-Achse (18) aufweist.

16. Bearbeitungszentrum nach einem der Ansprüche 11 bis 15,
**dadurch gekennzeichnet, daß**
die Stirnseiten der Dreheinrichtung (3) und der Versorgungseinrichtungen (4, 5) als konzentrisch zueinander angeordnete Ringflächen (21, 22, 24) ausgebildet sind, die im wesentlichen in einer gemeinsamen Ebene (16) liegen.

## Claims

1. Processing centre with a spindle unit for holding processing tools and processing units for wood and plastic materials or the like,
- with a spindle housing (1) movable by means of a guide assembly in X, Y and Z directions (17),
- a driven processing spindle (2) mounted in the spindle housing (1) so as to be rotatable about a C axis (18),
- a rotating device (3) connected to the spindle housing (1) for positioning the processing units (6) during the processing operation about the C axis (18)
- and means (4, 5) for supply of the processing tools and processing units with compressed air and/or a fluid, electrical driving and/or controlling energy and the like,
characterised in that the rotating device (3) and the supply means (4, 5) are in each case of modular construction and concentrically surround the processing spindle (2) .

2. Processing centre according to claim 1, characterised in that the rotating device (3) and the supply means (4, 5) of the spindle unit are in each case constructed as self-contained subassemblies coordinated with each other.

3. Processing centre according to claim 1 or 2, characterised in that the rotating device (3) and the supply means (4, 5) of the spindle unit are essentially constructed in the shape of a sleeve or ring.

4. Processing centre according to any of claims 1 to 3, characterised in that the rotating device (3) directly surrounds the processing spindle (2).

5. Processing centre according to any of claims 1 to 4, characterised in that the rotating device (3) of the spindle unit consists of a base portion (7) attached to the spindle housing (1) and a rotating sleeve (8) mounted in cantilever fashion thereon.

6. Processing centre according to claim 5, characterised in that the driving torque for the rotating sleeve is transmitted to the rotating sleeve (8) in the region of the base portion (7).

7. Processing centre according to claim 5 or 6, characterised in that the rotating sleeve (8) of the rotating device (3) is endlessly rotatable through 360°.

8. Processing centre according to any of claims 5 to 7, characterised in that the rotating sleeve (8) of the rotating device (3) is provided with pipes for passage of compressed air and/or a fluid as well as with compressed air or fluid connections in the region of its end facing towards the processing tool or processing unit.

9. Processing centre according to claim 8, characterised in that the means (4) for supply with compressed air and/or a fluid is arranged on the outside of the rotating device (3) and comprises transmission openings to the pipes of the rotating device (3).

10. Processing centre according to claim 9, characterised in that the means (5) for supply with electrical driving and/or controlling energy is arranged on the outside of the rotating device (3), in the direction of the spindle axis adjacent to the supply means (4) for compressed air and/or a fluid.

11. Processing centre according to any of claims 1 to 7, characterised in that the means (4) for supply with compressed air and/or a fluid is arranged on the outside of the rotating device (3) and comprises compressed air connections (15) or connections for the fluid in the region of its end (24) facing towards the processing tool or processing unit.

12. Processing centre according to claim 11, characterised in that the means (5) for supply with electrical driving and/or controlling energy is arranged on the outside of the means (4) for supply with compressed air and/or a fluid.

13. Processing centre according to any of claims 1 to 12, characterised in that the means (5) for supply of the processing tools and processing units with electrical driving and/or controlling energy comprises contact assemblies in the region of its end (21) facing towards the processing tool or processing unit.

14. Processing centre according to any of claims 1 to 13, characterised in that the means (5) for supply with electrical driving and/or controlling energy is of inherently modular construction.

15. Processing centre according to any of claims 1 to 14, characterised in that the rotating device (3) of the spindle unit in the region of its end (22) facing towards the processing tool or processing unit comprises locking elements for the transmission of a torque for rotation about the C axis (18).

16. Processing centre according to any of claims 11 to 15, characterised in that the ends of the rotating device (3) and of the supply means (4, 5) are constructed as ring surfaces (21, 22, 24) which are arranged concentrically with each other and lie essentially in a common plane (16).

## Revendications

1. Centre d'usinage, avec une unité de broche pour porter des outils d'usinage et des groupes d'usinage destinés à des matériaux en bois et en matière plastique ou analogues,
- avec un carter de broche (1), déplacable en direction X, Y, et Z (17) par l'intermédiaire d'un dispositif de guidage,
- une broche d'usinage (2) entraînée, montée à rotation autour d'un axe C (18) dans le carter de broche (1),
- un dispositif de rotation (3) relié au carter de broche (1) pour positionner les groupes d'usinage (6) lors du processus d'usinage autour de l'axe C (18),
- ainsi que des dispositifs (4, 5) pour alimenter les outils d'usinage et les groupes d'usinage avec de l'air comprimé et/ou un fluide, de l'énergie électrique d'entraînement et/ou de commande et analogue,
caractérisé en ce que
le dispositif de rotation (3) et les dispositifs d'alimentation (4, 5) sont chacun de construction modulaire et entourent concentriquement la broche d'usinage (2).

2. Centre d'usinage selon la revendication 1, caractérisé en ce que le dispositif de rotation (3) et les dispositifs d'alimentation (4, 5) de l'unité de broche sont chacun réalisés sous la forme de groupes de construction adaptés les uns en fonction des autres, fermés en soi.

3. Centre d'usinage selon la revendication 1 ou 2, caractérisé en ce que le dispositif de rotation (3) et les dispositifs d'alimentation (4, 5) de l'unité de broche sont réalisés sensiblement en forme de douilles ou d'anneaux.

4. Centre d'usinage selon l'une des revendications 1 à 3, caractérisé en ce que le dispositif de rotation (3) entoure directement la broche d'usinage (2).

5. Centre d'usinage selon l'une des revendications 1 à 4, caractérisé en ce que le dispositif de rotation (3) de l'unité de broche est constitué d'une partie socle (7) fixée sur le carter de broche (1) et d'une douille de rotation (8), montée en porte-à-faux sur celle-ci.

6. Centre d'usinage selon la revendication 5, caractérisé en ce que le couple d'entraînement de la douille de rotation est transmis à la douille de rotation (8) dans la zone de la partie socle (7).

7. Centre d'usinage selon la revendication 5 ou 6, caractérisé en ce que la douille de rotation (8) du dispositif de rotation (3) est susceptible de tourner de façon continue sur une plage de 360°.

8. Centre d'usinage selon l'une des revendications 5 à 7, caractérisé en ce que la douille de rotation (8) du dispositif de rotation (3) est dotée de conduites de passage pour l'air comprimé et/ou un fluide ainsi que de raccordements pour air comprimé ou pour fluide dans la zone de sa face frontale, tournée vers l'outil d'usinage ou le groupe d'usinage.

9. Centre d'usinage selon la revendication 8, caractérisé en ce que le dispositif (4) destiné à l'alimentation en air comprimé et/ou en un fluide est disposé sur la face extérieure du dispositif de rotation (3) et présente des ouvertures de transmission vers les conduites de passage du dispositif de rotation (3).

10. Centre d'usinage selon la revendication 9, caractérisé en ce que le dispositif (5), destiné à l'alimentation en énergie électrique d'entraînement et/ou de commande, est disposé sur la face extérieure du dispositif de rotation (3), de façon voisine, dans la direction de l'axe de l'unité de broche, par rapport au dispositif d'alimentation (4) pour l'air comprimé et/ou un fluide.

11. Centre d'usinage selon l'une des revendications 1 à 7, caractérisé en ce que le dispositif (4) d'alimentation en air comprimé et/ou en un fluide est disposé sur la face extérieure du dispositif de rotation (3) et présente, dans la zone de sa face frontale (24) tournée vers l'outil d'usinage ou le groupe d'usinage, des raccordements d'air comprimé (15) ou des raccordements pour le fluide.

12. Centre d'usinage selon la revendication 11, caractérisé en ce que le dispositif (5) d'alimentation en énergie électrique d'entraînement et/ou de commande est disposé sur la face extérieure du dispositif (4) pour l'alimentation en air comprimé et/ou en un fluide.

13. Centre d'usinage selon l'une des revendications 1 à 12, caractérisé en ce que le dispositif (5) d'alimentation des outils d'usinage et des groupes d'usinage en énergie électrique d'entraînement et/ou de commande présente des moyens de contact dans la zone de sa face frontale (21) tournée vers l'outil d'usinage ou le groupe d'usinage.

14. Centre d'usinage selon l'une des revendications 1 à 13, caractérisé en ce que le dispositif (5) d'alimentation en énergie électrique d'entraînement et/ou de commande est d'une structure modulaire en soi.

15. Centre d'usinage selon l'une des revendications 1 à 14, caractérisé en ce que le dispositif de rotation (3) de l'unité de broche présente dans la zone de sa face frontale (22), tournée vers l'outil d'usinage ou le groupe d'usinage, des éléments de verrouillage destinés à la transmission d'un couple pour une rotation autour de l'axe C (18).

16. Centre d'usinage selon l'une des revendications 11 à 15, caractérisé en ce que les faces frontales du dispositif de rotation (3) et des dispositifs d'alimentation (4, 5) sont réalisées sous la forme de surfaces annulaires (21, 22, 24) disposées concentriquement les unes aux autres, situées sensiblement dans un plan (16) commun.
